# EUROPÄISCHE PATENTSCHRIFT

(11) **EP 1 689 551 B1**
(45) Veröffentlichungstag und Bekanntmachung des Hinweises auf die Patenterteilung: **19.12.2012**
(21) Anmeldenummer: 04796953.0
(22) Anmeldetag: 24.11.2004
(51) Int. Cl.: B23K 11/31, B23K 11/30, B23K 11/36, B23K 35/00

(54) **PUNKTSCHWEIßZANGE ZUM WIDERSTANDSSCHWEIßEN VON WERKSTÜCKEN**
SPOT WELDING GUN FOR RESISTANCE WELDING OF WORKPIECES
PINCE A SOUDER PAR POINTS POUR LE SOUDAGE PAR RESISTANCE DE PIECES

(30) Priorität: 25.11.2003 AT 18872003
(43) Veröffentlichungstag der Anmeldung: 16.08.2006
(73) Patentinhaber: Fronius International GmbH, 4643 Pettenbach (AT)
(72) Erfinder: STIEGLBAUER, Walter, A-4901 Manning (AT); WEIGERSTORFER, Günter, A-4621 Sipbachzell (AT)
(74) Vertreter: Sonn & Partner Patentanwälte
(86) Internationale Anmeldenummer: PCT/AT2004/000410
(87) Internationale Veröffentlichungsnummer: WO 2005/051588

(56) Entgegenhaltungen:
- EP-A- 1 352 700
- PATENT ABSTRACTS OF JAPAN Bd. 005, Nr. 010 (M-051), 22. Januar 1981 (1981-01-22) & JP 55 141387 A (HITACHI LTD), 5. November 1980 (1980-11-05) in der Anmeldung erwähnt

## Beschreibung

Die Erfindung betrifft eine Punktschweißzange zum Widerstandsschweißen von Werkstücken mit einem Grundkörper und einem Bügel, an welchem Elektrodenaufnahmen und an diesen wiederum Elektroden angeordnet sind, wobei zumindest eine Elektrodenaufnahme an einem Betätigungsmittel befestigt ist, über welches die daran befestigte Elektrodenaufnahme mit der Elektrode in Längsrichtung zur weiteren Elektrode verschiebbar ist, wobei zum Schutz der Elektroden jeweils eine Wickelvorrichtung mit einem Band angeordnet ist, welches Band zwischen der Kontaktfläche der Elektrode und dem Werkstück gegenüber der Elektrode verschiebbar angeordnet ist und wobei die der verschiebbaren Elektrode zugeordnete Wickelvorrichtung mit der verschiebbaren Elektrode derart verbunden ist, dass diese eine Längsbewegung der Elektrode mit vollzieht.

Die beschriebene Punktschweißzange dient insbesondere für Roboteranwendungen zum Widerstandsschweißen von insbesondere Blechförmigen Werkstücken.

Derzeit werden beispielsweise im Karosseriebau vermehrt Bleche oder andere Werkstücke aus Aluminiumlegierungen und Magnesium, sowie verzinkte bzw. beschichtete Stahlbleche - teilweise in hochfester Ausführung - eingesetzt. Neben Vorteilen wie Gewichtsersparnis und guter Korrosionsbeständigkeit verursachen diese Materialien bzw. deren Beschichtungen, Probleme beim Fügen durch Widerstands-Punktschweißen. In erster Linie wirkt sich die gegenüber blankem Stahlblech stark verringerte Standmenge der verwendeten Punktschweißelektroden nachteilig aus. Der hohe Verschleiß der Elektroden verursacht hohe Kosten durch häufiges Nachbearbeiten der Elektrodenkontaktfläche bzw. durch die daraus resultierenden häufigen Elektrodenwechsel sowie eine verminderte Schweißqualität insbesondere vor einer Nachbearbeitung der Elektroden oder vor einem Elektrodenwechsel.

Es sind verschiedenste Punktschweißzangen, insbesondere so genannte "C-Zangen", bei welchen die Bestandteile der Punktschweißzange eine C-förmige Gestalt aufweisen, aus dem Stand der Technik bekannt, jedoch nicht in Kombination mit einem umlaufenden Band, welches die Elektrode vor Verschmutzung schützt.

Aus der DE 102 21 905 A1 ist eine Schweißzange mit einem Zangenausgleich und ein Verfahren zum Ausgleich der Schweißzange bekannt. Für den Ausgleich der Schweißzange werden pneumatische oder hydraulische Antriebe, Servoantriebe mit Getriebe, oder auch ansteuerbare Elektromagneten verwendet.

Der Nachteil dieser Punktschweißzange und des Verfahrens liegt darin, dass die Elektrode, wie einleitend schon beschrieben, während der Punktschweißung direkt Kontakt mit den zu verschweißenden Werkstücken bzw. Blechen hat und dadurch die Elektroden einen hohen Verschleiß aufweisen. Somit muss ein häufiges Nacharbeiten bzw. Wechseln der Elektroden vollzogen werden, weshalb ein häufiger Produktionsstillstand der Punktschweißzangen in Kauf genommen werden muss.

Zum Schutz einer Elektrode vor Verschmutzung bzw. einer Auflegierung der Elektrode durch den zu verschweißenden Werkstoff ist es bekannt, zwischen der Elektrode und dem Werkstück eine Metallfolie in Form eines Bandes beizulegen. Um einen gesicherten Bandvorschub zu erlangen, ist es notwendig, ein Festkleben des Bandes an der Kontaktfläche der Elektrode zu verhindern.

Aus der DE 197 54 546 C1 ist ein Punktschweißwerkzeug mit einer Wickelvorrichtung zum Auf- und Abwickeln eines an der Elektrodenspitze der Punktschweißelektrode quer anliegenden Folienbandes bekannt. Das Punktschweißwerkzeug ist mit einer ringförmigen Abwickelspule zum Abwickeln des Folienbandes und einer ringförmigen Aufwickelspule zum Aufwickeln des Folienbandes ausgestattet und weist eine ringförmige Antriebsvorrichtung zum getakteten Drehen der Aufwickelspule auf. Die Abwickelspule, die Aufwickelspule und die Antriebsvorrichtung sind koaxial zueinander nebeneinander rings des Elektrodenschafts bzw. der Elektrodenaufnahme der Punktschweißelektrode angeordnet. Schräg zu dem Elektrodenschaft und im radialen Abstand von der Abwickelspule ist eine erste Schränkrolle angeordnet, mittels derer das Folienband von der Abwickelspule zur Elektrodenspitze hin umlenkbar und querstellbar ist. Ferner ist schräg zum Elektrodenschaft und im radialen Abstand von der Aufwickelspule eine zweite Schränkrolle angeordnet, mittels derer das Folienband von der Elektrodenspitze zu der Aufwickelspule hin umlenkbar und querstellbar ist, wobei die beiden Schränkrollen aneinander gegenüberliegend seitens des Elektrodenschafts angeordnet sind.

Eine ähnliche Ausbildung ist auch aus der JP 05 192 774 A bekannt, bei der ebenfalls die Auf- und Abwickelspulen am Elektrodenschaft bzw. an der Elektrodenaufnahme angeordnet sind.

Nachteilig ist bei den zuvor genannten Ausbildungen der DE 197 54 546 C1 und der JP 05 192 774 A, dass durch die Anordnung der Auf- und Abwickelspule im Bereich des Elektrodenschafts bzw. der Elektrodenaufnahme die Zugänglichkeit des Punktschweißwerkzeuges sehr eingeschränkt wird, da eine wesentliche Verbreiterung der Punktschweißzange im Endbereich, insbesondere im Schweißbereich, zustande kommt. Hiermit müsste eine wesentlich größere Bauform einer derartig ausgebildeten C-Zange geschaffen werden, was eine erhebliche Gewichtszunahme verursacht und wodurch wesentlich größer dimensionierte Roboter eingesetzt werden müssen. Somit können mit einem derartigen Punktschweißwerkzeug, im Speziellen beim Einsatz einer C-Zange, nur leicht zugängliche Werkstücke punktgeschweißt werden.

Anwendungen von Bändern zum Schutz der Elektroden beim Punktschweißverfahren sind weiters aus der JP 10 029 071 A, der JP 08 118 037 A, JP 04 322 886 A oder der JP 05 192 774 A bekannt. Dabei wird bei den Punktschweißwerkzeugen das Band, welches über eine Wickelvorrichtung zu- und abgeführt wird, über die Elektrode ebenfalls als Schutz vor der Berührung der Elektrode mit dem Werkstück bzw. Bauteil positioniert, sodass bei einem Punktschweißprozess das Band am Werkstück bzw. Bauteil zum Anliegen kommt. Dabei werden die Auf- und Abwickelspulen unabhängig vom Punktschweißwerkzeug angeordnet bzw. befestigt.

Nachteilig ist hierbei, dass damit ein sehr großer Platzbedarf notwendig ist, sodass eine direkte Anwendung nur bei flachen Werkstücken möglich ist. Somit ist ein Einsatz bei einer C-Zange im automatisierten Bereich, insbesondere bei einem Roboter, nicht möglich.

Die GB 571 401 A betrifft eine Elektrodenanordnung für eine Punktschweißzange, bei der ein dünnes Schutzband aus Kupfer zum Schutz der Elektrode, welches zwischen der Kontaktfläche der Elektrode und dem Werkstück verschiebbar angeordnet ist, eingesetzt wird. Dabei ist die Wickelvorrichtung mit dem Elektrodenschutzband an der beweglichen Elektrodenaufnahme angeordnet, so dass diese die Längsbewegung der Elektrode mit vollzieht. Nachteilig bei der Konstruktion gemäß der GB 571 401 A ist, dass die Bandführung seitlich der Elektrode sehr viel Platz einnimmt, so dass eine Anwendung des Schweißgeräts nur bei flachen Werkstücken möglich ist. Die Zugänglichkeit wird durch das Elektrodenschutzband wesentlich beeinflusst. Darüber hinaus sind die Komponenten zur Führung des Bandes relativ kompliziert aufgebaut.

Die JP 55 141 387 A zeigt eine Punktschweißzange, bei der ebenfalls an der Elektrodenaufnahme eine Wickelvorrichtung für ein Elektrodenschutzband angeordnet ist. Auch bei dieser Konstruktion erfordert die Bandführung relativ viel Platz, wodurch die Zugänglichkeit negativ beeinflusst wird. Eine Anwendung der Punktschweißzange zum Schweißen von Werkstücken mit komplexer Geometrie ist daher nicht möglich.

Die Aufgabe der vorliegenden Erfindung besteht daher in der Schaffung einer Punktschweißzange, insbesondere einer C-Zange, für Roboteranwendungen zum Widerstandsschweißen von Werkstücken, bei der die Zugänglichkeit nicht wesentlich beeinflusst wird und ein sehr einfacher und kompakter Aufbau mit einem Band zum Schutz der Elektrode geschaffen wird.

Die Aufgabe wird dadurch gelöst, dass die Elektrodenaufnahmen und die Elektroden eine Vorrichtung zum Führen des Bandes von der Wickelvorrichtung axial entlang der Elektrodenaufnahmen zur Elektrode und wieder axial entlang der Elektrodenaufnahme zurück zur Wickelvorrichtung aufweisen. Durch diese spezielle Anordnung und Führung des Bandes wird ein kompakter Aufbau der Punktschweißzange erreicht, wobei die Zugänglichkeit der Punktschweißzange mit dem angeordneten Band gegenüber einer handelsüblichen Punktschweißzange ohne Band nicht eingeschränkt wird.

Damit wird in vorteilhafter Weise erreicht, dass durch die Anordnung der Wickelvorrichtung am Grundkörper oder aber auch an dem Bügel und an dem Betätigungselement ein wesentlich vereinfachtes Wechseln der Wickelvorrichtung sowie das Ein- und Ausfädeln des Bandes erreicht wird. Des Weiteren kann durch den Einsatz des Bandes zum Schutz der Elektrode eine handelsübliche Elektrode verwendet werden, ohne dass dabei die Anzahl der Schweißpunkte reduziert wird. Durch die spezielle Anordnung und Führung des Bandes wird ein kompakter Aufbau der C-Zange erreicht, wobei die Zugänglichkeit der C-Zange mit dem angeordneten Band gegenüber einer handelsüblichen C-Zange ohne Band nicht eingeschränkt wird.

Eine weitere vorteilhafte Ausbildung wird in den Ansprüchen 2 bis 6 erläutert, da dadurch eine einfache und kostengünstige Ausgestaltung der Wickelvorrichtung erreicht wird.

Von Vorteil ist eine Ausgestaltung nach den Ansprüchen 7 bis 13, da dadurch die Wickelvorrichtung die Längsbewegung bzw. Längsverschiebung der Elektrode zum Werkstück bzw. den Blechen mit vollzieht. Somit muss das Band bei einer Bewegung der Elektrode zu den Werkstücken nicht für die Durchführung der Bewegung gelockert werden bzw. bei einer Bewegung der Elektrode von den Werkstücken weg nicht gespannt bzw. aufgewickelt werden. Damit wird auch erreicht, dass das Band gespannt gehalten bleibt, da die Wickelvorrichtung die Bewegung der Elektrode zum Werkstück ebenfalls durchführt, und somit ein Verkeilen bzw. loses Herumhängen des Bandes in einfacher Form verhindert wird.

Vorteilhaft ist auch eine Ausgestaltung nach den Ansprüchen 14 bis 20, da dadurch der am Grundkörper der Punktschweißzange angeordnete Bügel eine Ausgleichsbewegung zu den Werkstücken bzw. Blechen durchführen kann, wobei die für diesen Bügel angeordnete Wickelvorrichtung ebenfalls die Ausgleichsbewegung durchführt. Somit wird das genaue Positionieren der Punktschweißzange, welche insbesondere für Roboteranwendungen ausgestaltet ist, wesentlich vereinfacht.

Die vorliegende Erfindung wird anhand der beigefügten Zeichnungen näher erläutert.

Darin zeigen:
Fig. 1 eine perspektivische Ansicht einer erfindungsgemäßen C-förmigen Punktschweißzange in geöffnetem Zustand;
Fig. 1a eine perspektivische Ansicht der erfindungsgemäßen C-förmigen Punktschweißzange während einer Punktschweißung;
Fig. 2 eine perspektivische Ansicht eines Betätigungselementes der erfindungsgemäßen Punktschweißzange;
Fig. 3 eine perspektivische Ansicht eines bevorzugt L-förmigen Bügels mit einer daran angeordneten Wickelvorrichtung;
Fig. 4 eine weitere perspektivische Ansicht eines bevorzugt L-förmigen Bügels der erfindungsgemäßen Punktschweißzange;
Fig. 5 eine weitere perspektivische Ansicht eines Bügels der erfindungsgemäßen Punktschweißzange;
Fig. 6 eine weitere perspektivische Ansicht eines Bügels der erfindungsgemäßen Punktschweißzange; und
Fig. 7 eine schematische perspektivische Ansicht einer weiteren Ausführung einer Punktschweißzange.

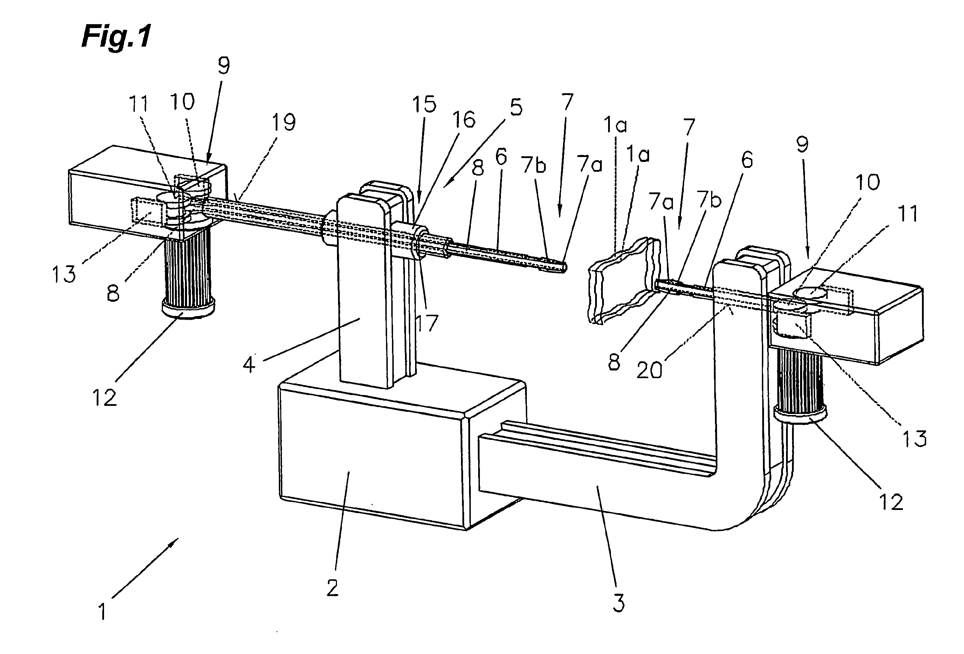

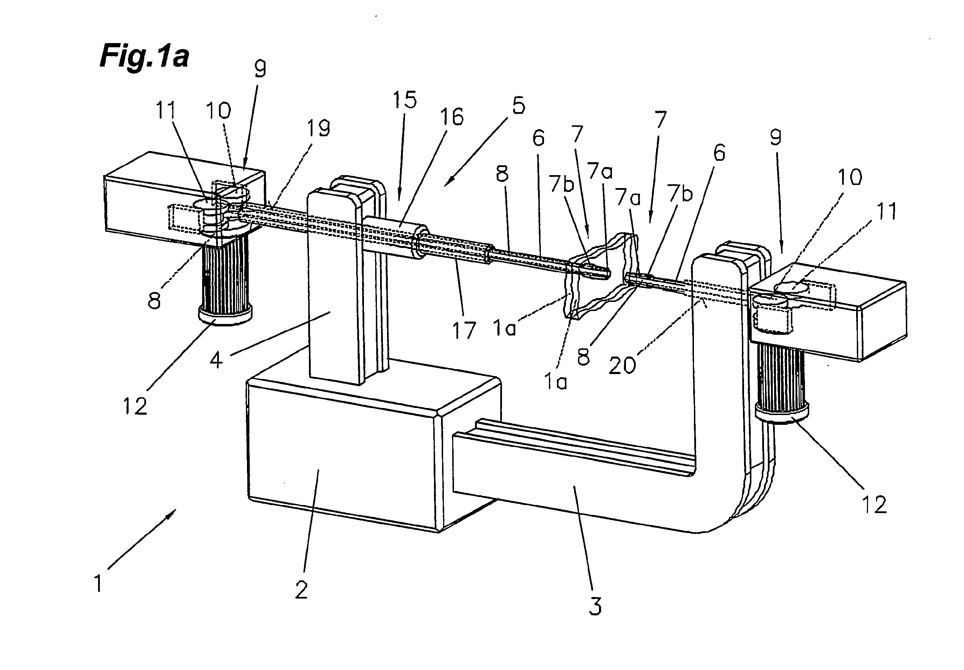

In den Figuren 1 bis 6 ist eine Punktschweißzange 1 für Roboteranwendungen zum Widerstandsschweißen von Werkstücken 1a, insbesondere Blechen, perspektivisch dargestellt. Dabei handelt es sich um eine sogenannte "C-Zange", die beispielsweise für Roboteranwendungen in der Automobil-Industrie eingesetzt wird.

Die Punktschweißzange 1, wie in Fig.1 dargestellt, besteht aus einem Grundkörper 2, einem Bügel 3, einem Hauptelement 4 und einem am Hauptelement 4 befestigten Betätigungselement 5, die bevorzugt eine C-förmige Gestalt aufweisen. Am Bügel 3 und am Betätigungselement 5 sind Elektrodenaufnahmen 6 und Elektroden 7 angeordnet. Zum Schutz der Elektroden 7 ist jeweils ein Band 8 angeordnet, welches zwischen der Kontaktfläche der Elektrode 7 und dem Werkstück 1a bzw. dem Blech gegenüber den Elektroden 7 verschiebbar angeordnet ist. Das Band 8 wird von einer Wickelvorrichtung 9, welche sich aus einer Abspulrolle 10 und einer Aufwickelrolle 11 für das Band 8 zusammensetzt, zu den Elektroden 7 bzw. den Elektrodenkappen und wieder zurück zur Wickelvorrichtung 9 geführt. Die Wickelvorrichtungen 9 sind vorzugsweise am Betätigungselement 5 und am Bügel 3 angeordnet. Selbstverständlich ist es möglich, die Wickelvorrichtungen 9 anstelle des Bügels 3 im oder am Grundkörper 2 anzuordnen. Die Abspulrolle 10 und/oder die Aufwickelrolle 11 ist mit einem Antriebsmittel 12, insbesondere einem elektronisch ansteuerbaren Motor, gekoppelt.

Die beiden gegenüberliegenden Elektroden 7 der Punktschweißzange 1 sind zu den Werkstücken 1a, insbesondere den Blechen, wie schematisch in Fig.1 dargestellt, distanziert positioniert, wogegen in Fig.1a eine Elektrode 7 der Punktschweißzange 1 den benötigten Verfahrweg zu den Werkstücken 1a, insbesondere Blechen, bereits zurückgelegt hat und eine Punktschweißung an den Werkstücken 1a durchgeführt wird. In diesem Fall hat die am Betätigungsmittel 5 angeordnete Elektrode 7 eine Längsbewegung bzw. Längsverschiebung zur gegenüberliegenden am Bügel 3 angeordneten Elektrode 7 durchgeführt und sind somit beide Elektroden 7 am Werkstück 1a zum Anliegen gekommen. Dabei hat die Wickelvorrichtung 9 den linearen Längsverstellweg der am Betätigungsmittel 5 angeordneten Elektrode 7 mit vollzogen. Somit ist gewährleistet, dass das Band 8 zum Schutz der Elektrode 7 straff gehalten wird, da eine vollständige Verschiebung der Wickelvorrichtung 9 mit der Elektrode 7 vollzogen wird, und somit der Abstand der Wickelvorrichtung 9 bzw. der Abspul- und Aufwickelrolle 10, 11 und der Elektrode 7 bzw. der Elektrodenkappe immer konstant bleibt.

Als Elektrode 7 wird vorzugsweise ein speziell für den Einsatz des Bandes 8 geeigneter Aufbau verwendet. Selbstverständlich ist es aber auch möglich, jede beliebige aus dem Stand der Technik bekannte Elektrode 7 einzusetzen. Am Ende der Elektrode 7 sind ein Distanzhalter 7a und ein Druckelement 7b angeordnet, die in Längsrichtung der Elektrode 7 beweglich mit dieser verbunden sind, wobei das Druckelement 7b eine Kraft auf den Distanzhalter 7a ausübt. Der Distanzhalter 7a und das Druckelement 7b weisen eine Führung für das Band 8 auf, wobei das Band 8 bei nicht geschlossener Punktschweißzange 1 über den Distanzhalter 7a und das Druckelement 7b von der Elektrode 7 distanziert ist. Dies erfolgt derartig, dass der Distanzhalter 7a während oder nach dem Öffnen der Punktschweißzange 1 aufgrund der Druckbeaufschlagung über das Druckelement 7b das Band 8 von der Elektrodenoberfläche bzw. von der Elektrodenkappe abhebt, wogegen während eines Schweißvorganges, also bei geschlossener Punktschweißzange 1, der Distanzhalter 7a gegen das Druckelement 7b zurück geschoben wird, sodass die Elektrode 7 bzw. die Elektrodenkappe am Band 8 zum Anliegen kommt. Dabei wird zusätzlich zur Druckkraft der Punktschweißzange 1 aufgrund des Druckelementes 7b ein Druck bzw. eine Kraft vom Distanzhalter 7a auf das Werkstück 1a ausgeübt, sodass beispielsweise das prozessbedingte Aufbiegen bzw. Wölben der Bleche bzw. Bauteile verhindert wird. Durch den Einsatz einer derartigen Elektrode 7 bzw. eines derartigen Elektrodenaufbaus wird erreicht, dass das Band 8 bei geöffneter Punktschweißzange 1 nicht direkt an der Elektrodenkappe zum Anliegen kommt, sodass beim Verschieben des Bandes 8 dieses nicht an der Elektrode 7 reiben kann und somit die Lebensdauer der Elektrode 7 wesentlich erhöht wird.

Damit nunmehr das Band 8 von der Wickelvorrichtung 9 an die Elektrode 7 bzw. den Elektrodenaufbau herangeführt werden kann, sind am Bügel 3 und/oder am Hauptelement 4 und/oder an der Elektrodenaufnahme 6 Vorrichtungen, insbesondere Umlenkrollen und Gleitflächen, zum Führen und Umlenken des Bandes 8 angeordnet.

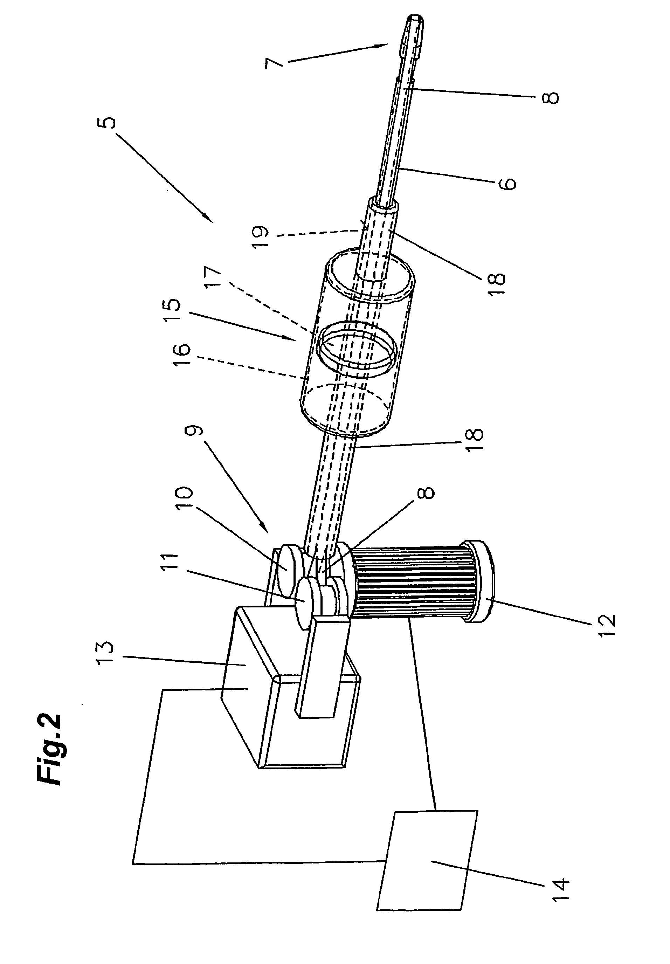

Im Bereich der Abspulrolle 10 und/oder der Aufwickelrolle 11 kann eine Bremsvorrichtung 13 für das Band 8, welche von einer Steuervorrichtung 14 ansteuerbar ist, angeordnet sein, wie in Fig.2 ersichtlich. Damit wird erreicht, dass das Band 8 gespannt gehalten wird und somit ein Verkeilen bzw. loses Herumhängen des Bandes 8 in einer Bohrung oder in einer Führungsnut verhindert wird. Die Bremsvorrichtung 13 ist bevorzugt in der Wickelvorrichtung 9 integriert. Auf eine detaillierte Darstellung wird dabei verzichtet, da die Ausbildung auf unterschiedlichste Weise erfolgen kann. Dabei könnte beispielsweise die Bremsvorrichtung 13 durch zwei zueinander bewegbare Druckelemente gebildet werden, zwischen denen das Band 8 geführt wird, wobei bei aktivierter Bremsvorrichtung 13 diese Druckelemente auf das Band 8 gefahren werden und somit das Band 8 fixiert wird. Die Aufgabe der Bremsvorrichtung 13 besteht also darin, dass diese nach dem Weiterbewegen des Bandes 8 das Band 8 fixiert, sodass das Band 8 immer gespannt ist. Die Wickelvorrichtung 9 ist so konzipiert, dass ein einfacher und unkomplizierter Wechsel bzw. Austausch der Abspulrolle 10 und Aufwickelrolle 11, bzw. des Bandes 8 vorgenommen werden kann.

Ein weiterer positiver Effekt der Anordnung der Abspulrolle 10 und Aufwickelrolle 11 besteht darin, dass durch die Führung des Bandes 8 von hinten, also vom Grundkörper 2 und/oder dem Bügel 3 und dem Hauptelement 4 bzw. dem Betätigungselement 5 zur Elektrode 7, keine störenden Elemente bzw. Teile vorhanden sind, was zur Folge hat, dass auch bei komplizierten zugänglichen Werkstücken 1a nahezu problemlos eine Punktschweißung durchgeführt werden kann, da keinerlei Einschränkung der Zugänglichkeit gegenüber Schweißzangen ohne Band 8 gegeben ist. Durch diese Ausgestaltung wird auch erreicht, dass die Baugröße der Punktschweißzange 1 gering gehalten werden kann und somit auch eine Gewichtsreduzierung erreicht wird.

Das Betätigungsmittel 5 wird dabei aus einem hydraulisch, pneumatisch oder elektromotorisch ansteuerbaren Antrieb, beispielsweise einem Zylinder 15, gebildet. Der Zylinder 15 besteht vorzugsweise aus einem Zylindermantel 16 und einem Kolben 17, durch welchen eine Kolbenstange 18 hindurchragt. Die Kolbenstange 18, welche durch den gesamten Zylinder 15 ragt, ist formschlüssig mit dem Kolben 17 verbunden, d.h., dass die Kolbenstange 18 an beiden Seiten des Zylinders 15 herausragt, sodass an beiden herausragenden Seiten der Kolbenstange 18 Elemente befestigt werden können, sodass der Bewegungsvorgang der Kolbenstange 18 auf diese übertragen wird. Der Kolben 17 ist so im Zylinder 15 angeordnet, dass der Kolben 17 entlang einer Längsachse des Zylinders 15 geführt wird, wodurch der Hub der Punktschweißzange 1 zum Heften von Blechen definiert wird. An der Kolbenstange 18 ist die Elektrodenaufnahme 6 für die Elektrode 7 angeordnet, wobei die Elektrodenaufnahme 6 und die Elektrode 7 wiederum Vorrichtungen, insbesondere Gleitflächen, zum Führen des Bandes 8 aufweisen. Die Elektrode 7 bzw. die Elektrodenaufnahme 6 ist an jener Seite des Zylinders 15 angeordnet, die dem Werkstück 1a bzw. der weiteren am Bügel 3 angeordneten Elektrode 7 zugeordnet ist. Weiters ist an der der Elektrode 7 gegenüberliegenden Seite des Zylinders 15 die Wickelvorrichtung 9 an der Kolbenstange 18 direkt bzw. über ein Führungselement befestigt. Somit ist die Wickelvorrichtung 9 mit der Abspul- und Aufwickelrolle 10, 11 über die Kolbenstange 18 des Betätigungsmittels 5 verstellbar. Somit macht die Wickelvorrichtung 9 den Hub des Betätigungselementes 5 mit und ein Umlenken oder Nachspannen des Bandes 8 ist nicht erforderlich.

Weiters weist die Kolbenstange 18 eine Bohrung 19 auf, die axial durch die Kolbenstange 18 verläuft. Die Bohrung 19 ist derartig ausgebildet, dass diese eine Führung für das Band 8 durch die Kolbenstange 18 bildet. Das Band 8 zum Schutz der Elektrode 7 erstreckt sich also von der Abspulrolle 10 axial durch die in der Kolbenstange 18 angeordnete Bohrung 19 zur Elektrode 7 bzw. Elektrodenkappe und gegenüberseitig wieder axial durch die in der Kolbenstange 18 angeordnete Bohrung 19 zur Aufwickelrolle 11 zurück. Durch diese spezielle Befestigung der Wickelvorrichtung 9 wird erreicht, dass bei einer Durchführung des Hubes der Abstand bzw. die Position der Abspul- und Aufwickelrolle 10, 11 zur Elektrode 7 bzw. der Elektrodenkappe immer gleich bleibt und somit das Band 8 immer gespannt und nie eine lose Bandführung gegeben ist.

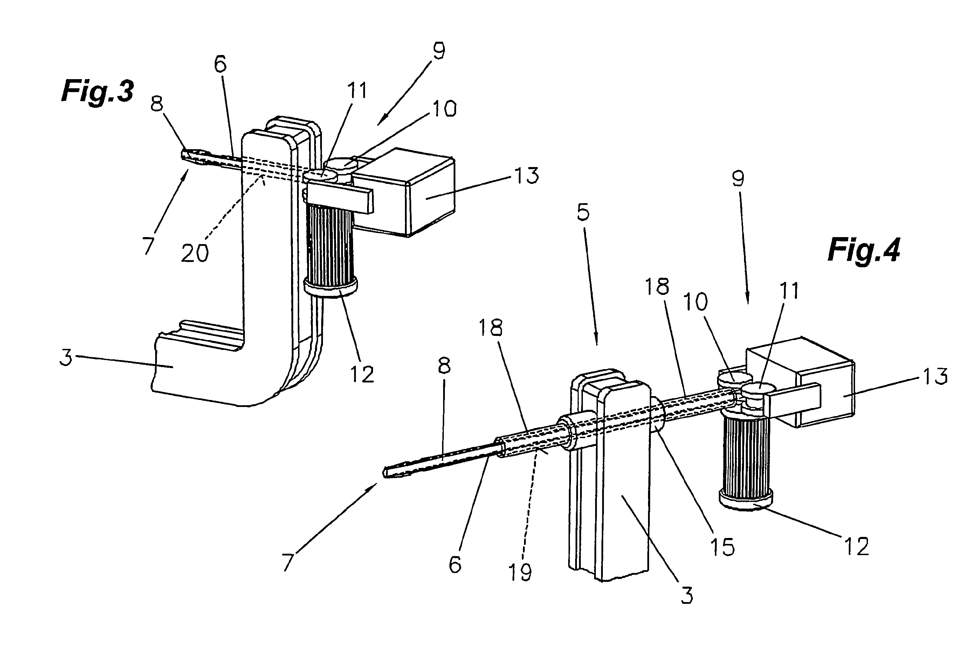

Weiters ist am Bügel 3 eine weitere Wickelvorrichtung 9 zum Schutz für die weitere Elektrode 7 angeordnet. Diese ist beispielsweise an der Außenseite bzw. an der der Elektrode gegenüberliegenden Seite des Bügels 3 starr am Bügel 3 befestigt, wie dies in Fig.3 dargestellt ist. Der Bügel 3 weist dabei wiederum Führungen bzw. eine axial zur Elektrode 7 angeordnete Bohrung 20 auf, durch welche das Band 8 zur Elektrode 7 geführt wird. Das Band 8 zum Schutz der Elektrode 7 erstreckt sich also von der in der Wickelvorrichtung 9 angeordneten Abspulrolle 10, axial durch die im Bügel 3 angeordnete Bohrung 20 zur Elektrode 7 bzw. Elektrodenkappe und gegenüberseitig wieder axial durch die Bohrung 20 zur Aufwickelrolle 11.

Natürlich ist es auch möglich, dass beispielsweise am Bügel 3 ein weiteres Betätigungselement 5 angeordnet ist. Somit kann eine Ausgleichsbewegung der Punktschweißzange, insbesondere C-Zange, zum Werkstück 1a durchgeführt werden, wie dies in Fig.4 dargestellt ist. Das Betätigungselement 5 ist dabei aus einem Zylinder 15 gebildet und im Zylinder 15 sind ein Kolben 17 und eine formschlüssig mit diesem verbundene Kolbenstange 18 angeordnet. Es ist auch möglich, dass das Betätigungselement 5 aus einem hydraulisch oder pneumatisch ansteuerbaren Zylinder 15, bzw. aus einem elektromotorischen Antrieb gebildet ist. Dabei kann die Ausführung bzw. Ausbildung dieses Betätigungsmittels 5 für den Bügel 3 gleich der Ausführung bzw. der Ausbildung des Betätigungsmittels 5 für das Hauptelement 4 sein. Grundsätzlich ist zu erwähnen, dass die Ausgleichsbewegung des Bügels 3 bzw. der an diesem angeordneten Elektrode 7 dazu dient, dass bei einer Roboteranwendung die Punktschweißzange 1, insbesondere die C-Zange, durch den Roboter vorpositioniert wird, worauf der Bügel 3 durch die Ausgleichsbewegung an das Werkstück 1a herangeführt wird und anschließend die gegenüberliegende Elektrode 7 am Betätigungselement 5 über die Längsbewegung ebenfalls an das Werkstück 1a positioniert wird.

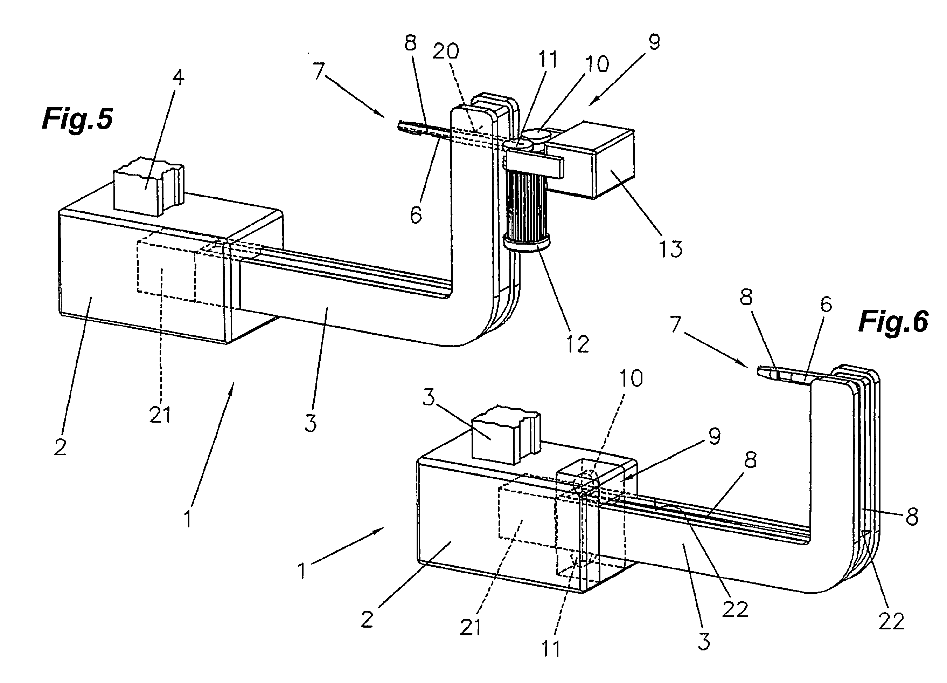

Weiters ist es möglich, dass die Ausgleichsbewegung der Punktschweißzange 1 für den Bügel 3 derartig erfolgt, dass der gesamte Bügel 3 verstellt wird, sodass das Betätigungsmittel 5 am Bügel 3, wie zuvor in Fig.3 beschrieben, entfallen kann. Hierzu ist der Bügel 3 über das im Grundkörper 2 angeordnete Betätigungsmittel 21 verstellbar gelagert, wie dies schematisch in Fig.5 dargestellt ist. Die Wickelvorrichtung 9 ist in diesem Ausführungsbeispiel fix auf dem Bügel 3 in axialer Ebene zur Elektrode 7 angeordnet. Somit wird bei einer Ausgleichsbewegung des Bügels 3 automatisch die Wickelvorrichtung 9 mit diesem mitbewegt, wodurch eine wesentliche Vereinfachung des Aufbaus erreicht wird.

In Fig.6 ist ein Ausführungsbeispiel dargestellt, bei dem die Wickelvorrichtung 9 im Grundkörper 2 am Bügel 3 angeordnet ist, sodass die Wickelvorrichtung 9 wiederum die Ausgleichsbewegung mit dem Bügel 3 durchführen kann. Hierzu ist im Bügel 3 ein Kanal bzw. eine Führung 22 angeordnet, in welcher das Band 8 von der in der Wickelvorrichtung 9 angeordneten Abspulrolle 10 entlang des Bügels 3 zur Elektrodenaufnahme 6 und der Elektrode 7 und wieder zurück zu der Aufwickelrolle 11 verläuft.

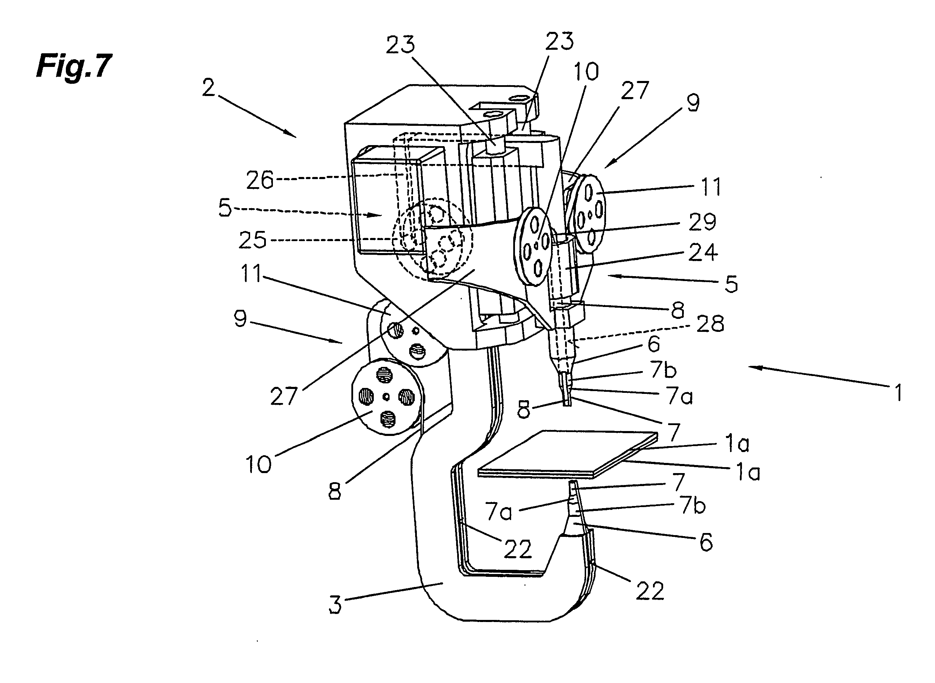

Ein weiteres Ausführungsbeispiel der erfindungsgemäßen C-Zange wird in der Fig.7 dargestellt. Die C-Zange besteht dabei aus dem Grundkörper 2, in welchem ein Führungselement 23 angeordnet ist, an welcher der bevorzugt C-förmig ausgebildete Bügel 3 gelagert ist. Dabei kann nunmehr über ein nicht dargestelltes Betätigungsmittel 5 die Ausgleichsbewegung für den Bügel 3 durchgeführt werden, wobei der Bügel 3 entlang des Führungselementes 23 verschoben wird. Die Wickelvorrichtung 9 ist bei dem dargestellten Ausführungsbeispiel im Bereich des Grundkörpers 2 auf der der Elektrode 7 gegenüberliegenden Seite des Bügels 3 angeordnet, wobei diese bei der Ausgleichsbewegung des Bügels 3 mitverschoben wird. Die Führung des Bandes 8 erfolgt dabei über Kanäle bzw. Führungen 22 entlang des Bügels 3 zur Elektrode 7, wie dies schon ausführlich in den zuvor beschriebenen Figuren erläutert ist.

Weiters ist das Hauptelement 4, an dem die weitere Elektrode 7 sowie eine Elektrodenaufnahme 6 befestigt sind, über ein weiteres Führungselement 24 am Grundkörper 2 verstellbar angeordnet. Um eine Verstellung bzw. einen bestimmten Anpressdruck für den Punktschweißvorgang am Werkstück 1a zu ermöglichen, ist im Grundkörper 2 ein weiteres Betätigungselement 5, wie schematisch strichliert dargestellt, angeordnet. Hierbei ist das Betätigungselement 5 beispielsweise als Kurbeltrieb 25 ausgebildet, wobei über ein Pleuel 26 das Hauptelement 4 verschoben wird. Wie aus dem dargestellten Beispiel ersichtlich, wird die Wickelvorrichtung 9, insbesondere die Abspul- und Aufwickelrolle 10, 11, an einer Abdeckung 27 angeordnet. Die Abdeckung 27 ist dabei direkt am Hauptelement 4 angeordnet und vollzieht somit die Bewegung des Hauptelementes 4 mit. Dabei ist es möglich die Abdeckung 27 vor oder hinter dem Führungselement 24 zu befestigen, wobei darauf zu achten ist, dass eine entsprechende Bandführung gewährleistet ist. Beispielsweise ist im Hauptelement 4 eine Bohrung 28 axial sowie eine mit der Bohrung 28 in Verbindung stehende Öffnung 29 angeordnet, welche die Aufgabe haben, das Band 8 über die Öffnung 29 und die Bohrung 28 durch die Führung 24 zu leiten, so dass bei einer Verschiebung des Hauptelementes 4 das Band 8 und die Wickelvorrichtung 9 die Verschiebung des Hauptelementes 4 mit vollziehen. Somit verläuft das Band 8 durch die Führung 24 zur Wickelvorrichtung 9.

Bei dem dargestellten Ausführungsbeispiel ist das Hauptelement 4 in Form der Kolbenstange 18 und das Führungselement 24 in Form des Zylinders 15 ausgebildet. Somit kann gesagt werden, dass die Funktionsweise des dargestellten Ausführungsbeispiels den vorhergehenden Ausführungsbeispielen entspricht, d.h., dass durch die Führung des Bandes 8 in der Bohrung 28 im Hauptelement 4 bei einer Verschiebung des Hauptelementes 4 gegenüber des Führungselementes 24 wiederum die Wickelvorrichtung 9 mit verschoben wird, wobei das Band 8 jedoch immer gespannt bleibt. Wesentlich ist bei einer derartigen Punktschweißzange 1, dass die Wickelvorrichtung 9 gleichzeitig mit den beweglichen geführten Teilen den Verstellweg ausführt. Somit wird erreicht, dass der Abstand zwischen Elektrode 7 bzw. der Elektrodenkappe 7a und der Wickelvorrichtung 9 immer gleich bleibt, so dass kein überschüssiges Band 8 zustande kommt. Dies wird in vereinfachter Form derart erreicht, dass sich das Band 8 bei Lagerungen, Führungsvorrichtungen, Zylinderausbildungen, usw. axial im Zentrum durch eine Führung bzw. Nut hindurch erstreckt.

Grundsätzlich ist zu erwähnen, dass die erfindungsgemäße Punktschweißzange 1 beispielsweise von einem Roboter zu einem Werkstück 1a positioniert wird. In Folge der Positionierung durch den Roboter führt die Punktschweißzange 1 eine Ausgleichsbewegung in Richtung des Werkstücks 1a mittels des verstellbar im Grundkörper 2 angeordneten Bügels 3 durch. Dies wird von einer Steuervorrichtung 14 ausgelöst und gesteuert, welche allerdings nicht dargestellt ist. Nach Kontaktierung der am Bügel 3 auf der Elektrodenaufnahme 6 angeordneten Elektrode 7 mit dem Werkstück 1a wird der eigentliche Punktschweißprozess durchgeführt. Dazu wird die mit dem Hauptelement 4 verstellbar angeordnete Elektrodenaufnahme 6 mit der darauf angeordneten Elektrode 7 in Richtung des Werkstücks 1a bis zur Kontaktierung mit dem Werkstück 1a bewegt. Da der Punktschweißprozess einen aus dem Stand der Technik bekannten Schweißprozess darstellt, wird auf den nachfolgenden Vorgang nicht mehr näher eingegangen.

## Patentansprüche

1. Punktschweißzange (1) zum Widerstandsschweißen von Werkstücken (1a) mit einem Grundkörper (2) und einem Bügel (3), an welchem Elektrodenaufnahmen (6) und an diesen wiederum Elektroden (7) angeordnet sind, wobei zumindest eine Elektrodenaufnahme (6) an einem Betätigungsmittel (5) befestigt ist, über welches die daran befestigte Elektrodenaufnahme (6) mit der Elektrode (7) in Längsrichtung zur weiteren Elektrode (7) verschiebbar ist, wobei zum Schutz der Elektroden (7) jeweils eine Wickelvorrichtung (9) mit einem Band (8) angeordnet ist, welches Band (8) zwischen der Kontaktfläche der Elektrode (7) und dem Werkstück (1a) gegenüber der Elektrode (7) verschiebbar angeordnet ist, und wobei die der verschiebbaren Elektrode (7) zugeordnete Wickelvorrichtung (9) mit der verschiebbaren Elektrode (7) derart verbunden ist, dass diese eine Längsbewegung der Elektrode (7) mit vollzieht, **dadurch gekennzeichnet, dass** die Elektrodenaufnahmen (6) und die Elektroden (7) Vorrichtungen zum Führen des Bandes (8) von der Wickelvorrichtung (9) axial entlang der Elektrodenaufnahmen (6) zur Elektrode (7) und wieder axial entlang der Elektrodenaufnahme (6) zurück zur Wickelvorrichtung (9) aufweisen.

2. Punktschweißzange (1) nach Anspruch 1, **dadurch gekennzeichnet, dass** die Wickelvorrichtung (9) eine Abspulrolle (10) und eine Aufwickelrolle (11) zur Führung des Bandes (8) zur Elektrode (7) und wieder zurück zur Wickelvorrichtung (9) beinhaltet.

3. Punktschweißzange (1) nach.Anspruch 2, **dadurch gekennzeichnet, dass** die Abspulrolle (10) und/oder die Aufwickelrolle (11) mit einem Antriebsmittel (12) gekoppelt ist.

4. Punktschweißzange (1) nach Anspruch 3, **dadurch gekennzeichnet, dass** das Antriebsmittel (12) durch einen elektronisch ansteuerbaren Motor gebildet ist.

5. Punktschweißzange (1) nach einem der Ansprüche 2 bis 4, **dadurch gekennzeichnet, dass** eine Bremsvorrichtung (13) für das Band (8) angeordnet ist, um das Band (8) gespannt zu halten.

6. Punktschweißzange (1) nach Anspruch 5, **dadurch gekennzeichnet, dass** die Bremsvorrichtung (13) von einer Steuervorrichtung (14) ansteuerbar ist.

7. Punktschweißzange (1) nach einem der Ansprüche 1 bis 6, **dadurch gekennzeichnet, dass** eine Wickelvorrichtung (9) auf dem am Grundkörper (2) angeordneten Bügel (3) und eine Wickelvorrichtung (9) am Betätigungsmittel (5) angeordnet ist.

8. Punktschweißzange (1) nach Anspruch 7, **dadurch gekennzeichnet, dass** der Bügel (3) C-förmig ausgebildet ist.

9. Punktschweißzange (1) nach einem der Ansprüche 1 bis 8, **dadurch gekennzeichnet, dass** das Betätigungsmittel (5) aus einem hydraulisch, pneumatisch oder elektromotorisch ansteuerbaren Antrieb, beispielsweise einem Zylinder (15), besteht.

10. Punktschweißzange (1) nach Anspruch 9, **dadurch gekennzeichnet, dass** der Zylinder (15) aus einem Zylindermantel (16), einem Kolben (17) und einer durchgehenden Kolbenstange (18) besteht, sodass die Wickelvorrichtung (9) mit dem Band (8) über den Kolben (17) bzw. die durchgehende Kolbenstange (18) verstellbar ist.

11. Punktschweißzange (1) nach Anspruch 10, **dadurch gekennzeichnet, dass** die Kolbenstange (18) Führungen bzw. eine axial zur Kolbenstange (18) angeordnete Bohrung (19) zur Führung des Bandes (8) aufweist.

12. Punktschweißzange (1) nach Anspruch 10 oder 11, **dadurch gekennzeichnet, dass** die Wickelvorrichtung (9) gegenüberseitig der Elektrode (7) auf der Kolbenstange (18) angeordnet ist.

13. Punktschweißzange (1) nach Anspruch 11 oder 12, **dadurch gekennzeichnet, dass** sich das Band (8) zum Schutz der Elektrode (7) von der Abspulrolle (10), axial durch die in der Kolbenstange (18) angeordnete Bohrung (19) zur Elektrode (7) und gegenüberseitig wieder axial durch die in der Kolbenstange (18) angeordnete Bohrung (19) zur Aufwickelrolle (11) erstreckt.

14. Punktschweißzange (1) nach einem der Ansprüche 1 bis 13, **dadurch gekennzeichnet, dass** eine Wickelvorrichtung (9) starr am Bügel (3) angeordnet ist.

15. Punktschweißzange (1) nach Anspruch 14, **dadurch gekennzeichnet, dass** der Bügel (3) eine axial zur Elektrode (7) angeordnete Bohrung (20) zur Führung des Bandes (8) aufweist.

16. Punktschweißzange (1) nach Anspruch 14 oder 15, **dadurch gekennzeichnet, dass** die Wickelvorrichtung (9) gegenüberseitig der Elektrode (7) auf dem Bügel (3) angeordnet ist.

17. Punktschweißzange (1) nach Anspruch 15 oder 16, **dadurch gekennzeichnet, dass** sich das Band (8) zum Schutz der Elektrode (7) von der Abspulrolle (10), axial durch die im Bügel (3) angeordnete Bohrung (20) zur Elektrode (7) und gegenüberseitig wieder axial durch die im Bügel (3) angeordnete Bohrung (20) zur Aufwickelrolle (11) erstreckt.

18. Punktschweißzange (1) nach einem der Ansprüche 14 bis 17, **dadurch gekennzeichnet, dass** am Bügel (3) ein weiteres Betätigungselement (5) angeordnet ist, über welches die daran befestigte Elektrodenaufnahme (6) mit der Elektrode (7) in Längsrichtung zur weiteren Elektrode (7) verschiebbar ist.

19. Punktschweißzange (1) nach Anspruch 18, **dadurch gekennzeichnet, dass** das Betätigungselement (5) aus einem Zylinder (15) gebildet ist und im Zylinder (15) ein Kolben (17) und eine formschlüssig mit diesem verbundene Kolbenstange (18) angeordnet sind.

20. Punktschweißzange (1) nach einem der Ansprüche 14 bis 17, **dadurch gekennzeichnet, dass** der Bügel (3) über ein im Grundkörper (2) angeordnetes Betätigungsmittel (21) verstellbar angeordnet ist.

## Claims

1. A spot welding gun (1) for the resistance welding of workpieces (1a), including a base body (2) and a bracket (3) on which electrode holders (6) carrying electrodes (7) are arranged, wherein at least one electrode holder (6) is fastened to an actuating means (5) via which the electrode holder (6) fastened thereto is displaceable together with one of said electrodes (7) in the longitudinal direction to a further one of said electrodes (7), wherein a winding device (9) including a strip (8) is each provided for the protection of the electrodes (7), which strip (8) is arranged to be displaceable relative to the electrode (7) between the contact surface of the electrode (7) and the workpiece (1a), and wherein the winding device (9) associated with the displaceable electrode (7) is connected with the displaceable electrode (7) so as to follow a longitudinal movement of said electrode (7), **characterized in that** the electrode holders (6) and the electrodes (7) comprise means for guiding the strip (8) from the winding device (9) axially along the electrode holder (6) to the electrode (7) and again axially along the electrode holder (6) back to the winding device (9).

2. A spot welding gun (1) according to claim 1, **characterized in that** the winding device (9) comprises a wind-off roller (10) and a wind-up roller (11) for the guidance of the strip (8) to the electrode (7) and back again to the winding device (9).

3. A spot welding gun (1) according to claim 2, **characterized in that** the wind-off roller (10) and/or the wind-up roller (11) are coupled with a driving means (12).

4. A spot welding gun (1) according to claim 3, **characterized in that** the driving means (12) is comprised of an electronically controllable motor.

5. A spot welding gun (1) according to any one of claims 2 to 4, **characterized in that** a braking device (13) is provided for the strip (8) to keep the strip (8) tight.

6. A spot welding gun (1) according to claim 5, **characterized in that** the braking device (13) is controllable by a control device (14).

7. A spot welding gun (1) according to any one of claims 1 to 6, **characterized in that** a winding device (9) is arranged on the bracket (3) mounted on the base body (2) and a winding device (9) is arranged on the actuating means (5).

8. A spot welding gun (1) according to claim 7, **characterized in that** the bracket (3) has a C-shaped configuration.

9. A spot welding gun (1) according to any one of claims 1 to 8, **characterized in that** the actuating means (5) is comprised of a hydraulically, pneumatically or electromotorically controllable drive such as, for instance, a cylinder (15).

10. A spot welding gun (1) according to claim 9, **characterized in that** the cylinder (15) is comprised of a cylinder jacket (16), a piston (17) and a throughgoing piston rod (18), wherein the winding device (9) together with the strip (8) is adjustable via the piston (17) and the throughgoing piston rod (18), respectively.

11. A spot welding gun (1) according to claim 10, **characterized in that** the piston rod (18) comprises a guide or bore (19) which is provided axially to the piston rod (18) for guiding the strip (8).

12. A spot welding gun (1) according to claim 10 or 11, **characterized in that** the winding device (9) is arranged on the piston rod (18) on the side opposite the electrode (7).

13. A spot welding gun (1) according to claim 11 or 12, **characterized in that** the strip (8) for the protection of the electrode (7) extends from the wind-off roller (10) axially through a bore (19) provided in the piston rod (18) to the electrode (7) and, on the opposite side, again axially through the bore (19) provided in the piston rod (18) to the wind-up roller (11).

14. A spot welding gun (1) according to any one of claims 1 to 13, **characterized in that** a winding device (9) is rigidly arranged on the bracket (3).

15. A spot welding gun (1) according to claim 14, **characterized in that** the bracket (3) comprises a bore (20) provided axially to the electrode (7) for guiding the strip (8).

16. A spot welding gun (1) according to claim 14 or 15, **characterized in that** the winding device (9) is arranged on the bracket (3) on the side opposite the electrode (7).

17. A spot welding gun (1) according to claim 15 or 16, **characterized in that** the strip (8) for the protection of the electrode (7) extends from the wind-off roller (10) axially through a bore (20) provided in the bracket (3) to the electrode (7) and, on the opposite side, again axially through the bore (20) provided in the bracket (3) to the wind-up roller (11).

18. A spot welding gun (1) according to any one of claims 14 to 17, **characterized in that** a further actuating element (5) is arranged on the bracket (3), via which the electrode holder (6) fastened thereto, together with the electrode (7), is displaceable in the longitudinal direction to the further electrode (7).

19. A spot welding gun (1) according to claim 18, **characterized in that** the actuating element (5) is comprised of a cylinder (15) and a piston (17) as well as a piston rod (18) positively connected with the former are arranged within the cylinder (15).

20. A spot welding gun (1) according to any one of claims 14 to 17, **characterized in that** the bracket (3) is arranged to be displaceable via an actuating means (21) arranged in the base body (2).

## Revendications

1. Pince de soudage par points (1) pour le soudage par résistance de pièces à usiner (1a), avec un corps de base (2) et un étrier (3), sur lequel sont agencés des porte-électrode (6) portant à leur tour des électrodes (7), dans laquelle au moins un porte-électrode (6) est fixé à un moyen d'actionnement (5) grâce auquel le porte-électrode (6) fixé à celui-ci peut être déplacé avec l'électrode (7) dans la direction longitudinale jusqu'à l'électrode (7) suivante, dans laquelle un dispositif d'enroulement (9) avec une bande (8) est respectivement agencé pour la protection des électrodes (7), laquelle bande (8) est agencée entre la surface de contact de l'électrode (7) et la pièce à usiner (1a) pour être déplaçable par rapport à l'électrode (7), et dans laquelle le dispositif d'enroulement (9) attribué à l'électrode déplaçable (7) est relié avec l'électrode déplaçable (7) de telle sorte que celui-ci induit un mouvement longitudinal de l'électrode (7), **caractérisée en ce que** les porte-électrode (6) et les électrodes (7) présentent des dispositifs de guidage de la bande (8) depuis le dispositif d'enroulement (9) axialement le long des porte-électrode (6) jusqu'à l'électrode (7) et à nouveau axialement le long du porte-électrode (6) jusqu'au dispositif d'enroulement (9).

2. Pince de soudage par points (1) selon la revendication 1, **caractérisée en ce que** le dispositif d'enroulement (9) contient un rouleau de dévidage (10) et un rouleau d'enroulement (11) pour le guidage de la bande (8) jusqu'à l'électrode (7) et à nouveau jusqu'au dispositif d'enroulement (9).

3. Pince de soudage par points (1) selon la revendication 2, **caractérisée en ce que** le rouleau de dévidage (10) et/ou le rouleau d'enroulement (11) sont couplés avec un moyen d'entraînement (12).

4. Pince de soudage par points (1) selon la revendication 3, **caractérisée en ce que** le moyen d'entraînement (12) est formé par un moteur à commande électronique.

5. Pince de soudage par points (1) selon l'une quelconque des revendications 2 à 4, **caractérisée en ce qu'**un dispositif de freinage (13) est agencé pour la bande (8) pour maintenir la bande (8) tendue.

6. Pince de soudage par points (1) selon la revendication 5, **caractérisée en ce que** le dispositif de freinage (13) est commandable par un dispositif de commande (14).

7. Pince de soudage par points (1) selon l'une quelconque des revendications 1 à 6, **caractérisée en ce qu'**un dispositif d'enroulement (9) est agencé sur l'étrier (3) agencé sur le corps de base (2), et un dispositif d'enroulement (9) est agencé sur le moyen d'actionnement (5).

8. Pince de soudage par points (1) selon la revendication 7, **caractérisée en ce que** l'étrier (3) est conçu en forme de C.

9. Pince de soudage par points (1) selon l'une quelconque des revendications 1 à 8 **caractérisée en ce que** le moyen d'actionnement (5) est constitué d'un entraînement à commande hydraulique, pneumatique ou électromotrice, par exemple d'un cylindre (15).

10. Pince de soudage par points (1) selon la revendication 9, **caractérisée en ce que** le cylindre (15) est constitué d'un corps de cylindre (16), d'un piston (17) et d'une tige de piston traversante (18), de sorte que le dispositif d'enroulement (9) est ajustable conjointement avec la bande (8) via le piston (17) voire la tige de piston traversante (18).

11. Pince de soudage par points (1) selon la revendication 10, **caractérisée en ce que** la tige de piston (18) présente des guidages ou un alésage (19) agencé axialement par rapport à la tige de piston (18) pour le guidage de la bande (8).

12. Pince de soudage par points (1) selon la revendication 10 ou 11, **caractérisée en ce que** le dispositif d'enroulement (9) est agencé sur la tige de piston (18) du côté opposé à l'électrode (7).

13. Pince de soudage par points (1) selon la revendication 11 ou 12, **caractérisée en ce que** la bande (8) pour la protection de l'électrode (7) s'étend depuis le rouleau de dévidage (10) axialement à travers l'alésage (19) agencé dans la tige de piston (18) jusqu'à l'électrode (7) et du côté opposé de nouveau axialement à travers l'alésage (19) agencé dans la tige de piston (18) jusqu'au rouleau d'enroulement (11).

14. Pince de soudage par points (1) selon l'une quelconque des revendications 1 à 13, **caractérisée en ce qu'**un dispositif d'enroulement (9) est agencé de manière rigide sur l'étrier (3).

15. Pince de soudage par points (1) selon la revendication 14, **caractérisée en ce que** l'étrier (3) présente un alésage (20) agencé axialement par rapport à l'électrode (7) pour le guidage de la bande (8).

16. Pince de soudage par points (1) selon la revendication 14 ou 15, **caractérisée en ce que** le dispositif d'enroulement (9) est agencé sur l'étrier (3) du côté opposé à l'électrode (7).

17. Pince de soudage par points (1) selon la revendication 15 ou 16, **caractérisée en ce que** la bande (8) pour la protection de l'électrode (7) s'étend depuis le rouleau de dévidage (10) axialement à travers l'alésage (20) agencé dans l'étrier (3) jusqu'à l'électrode (7) et du côté opposé de nouveau axialement à travers l'alésage (20) agencé dans l'étrier (3) jusqu'au rouleau d'enroulement (11).

18. Pince de soudage par points (1) selon l'une quelconque des revendications 14 à 17, **caractérisée en ce qu'**un autre élément d'actionnement (5) est agencé sur l'étrier (3) grâce auquel le porte-électrode (6) fixé à cet étrier est déplaçable avec l'électrode (7) dans la direction longitudinale jusqu'à l'électrode (7) suivante.

19. Pince de soudage par points (1) selon la revendication 18, **caractérisée en ce que** l'élément d'actionnement (5) est formé d'un cylindre (15), et un piston (17) et une tige de piston (18) qui lui reliée par complémentarité de forme sont agencés dans le cylindre (15).

20. Pince de soudage par points (1) selon l'une quelconque des revendications 14 à 17, **caractérisée en ce que** l'étrier (3) est agencé de manière ajustable par un moyen d'actionnement (21) agencé dans le corps de base (2).
